# EUROPEAN PATENT APPLICATION

(11) **EP 1 574 542 A1**
(43) Date of publication of application: **14.09.2005**
(21) Application number: 05005184.6
(22) Date of filing: 09.03.2005
(51) Int. Cl.: C08G 79/00

(54) **Novel one-dimensional coordination polymer**

(30) Priority: 10.03.2004 JP 2004068218
(71) Applicant: NAGOYA UNIVERSITY, Aichi Prefecture (JP)
(72) Inventor: Kitamura, Masato, Nagoya-shi Aichi-ken (JP); Nakano, Keiji, Showa-ku Nagoya-shi Aichi-ken (JP)
(74) Representative: Katzameyer, Michael

(57) **Abstract**

A one-dimensional coordination polymer having a linear structure and represented by general formula (I) given below: 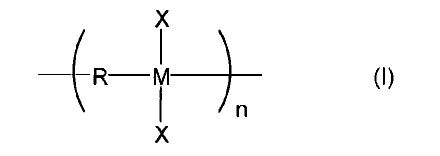 where M denotes copper or nickel, X denotes a halogen atom, R denotes a pyrazine derivative represented by general formula (II) given below, and n is an integer: 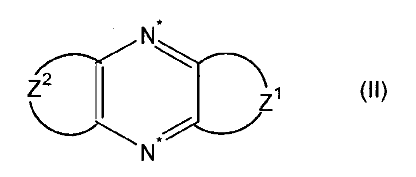 where each of Z¹ and Z², which may be the same or different, denotes an atomic group required for forming a carbon ring by joining with a methylene chain the carbon atoms in the 2-position and 3-position or the carbon atoms in the 5-position and 6-position of the pyrazine ring, and * denotes the binding position with M included in general formula (I).

## Description

The present invention relates to a novel one-dimensional coordination polymer having a pyrazine type bridging ligand.

The substance included in the group called organometallic compounds or metal complexes exhibits the variousness of the elements inherent in the inorganic compound and excellent molecular properties and design properties inherent in the organic compound. Therefore, the organometallic compounds and the metal complexes form the space and the electron structure, which cannot be achieved by any of the inorganic compound and the organic compound, so as to make it possible to exhibit new properties and functions, as described in, for example, "Cotton, F. A. J. Chem. Soc., Dalton Trans. 2000, 1961-1968". Particularly, the coordination polymer (integration type metal complex) having a repeating structure formed by the consecutive interaction between the ligand and the metal ion is expected to be utilized in the industries relating to the electrical, magnetic, and optical materials, as described in, for example, "Susumu Kitagawa, Integration type Metal Complex, published by Kodan-sha Inc., p2001".

It is impossible to develop the new function, particularly the electric and magnetic functions having electrons involved therein, by simply forming a spatial arrangement. Appropriate interaction between the electrons and between the orbitals within a coordination polymer are required for developing the new function noted above. However, attentions are paid mainly to the actual space structure of the coordination polymer in many reports published to date, and attentions are scarcely paid to the electron structure. Such being the situation, the function expected from the characteristic structure has not yet been developed. In order to develop new physical functions such as magnetic, electric and optical functions, it is very important to construct a coordination polymer having a linear structure capable of a consecutive interaction between the orbital of the ligand and the metal. However, a method for joining metal complex each having a giant planar cyclic ligand by using a bridging ligand is merely known to the art, a reliable technology for forming a linear structure has not yet been established.

The present invention, which has been achieved in view of the situation described above, is directed to the technology for constructing a coordination polymer having a linear structure and, thus, a main object of the present invention is to provide a technology that permits controlling the structure of the coordination polymer, and to provide a novel one-dimensional coordination polymer.

As a result of an extensive research conducted in an attempt to achieve the object noted above, the present inventors have found that it is possible to obtain a one-dimensional coordination polymer having a linear structure, which permits a consecutive interaction between the orbital of ligand and the metal, by using a specified pyrazine derivative as the bridging ligand so as to arrive at the present invention.

According to an aspect of the present invention, there is provided a one-dimensional coordination polymer having a linear structure and represented by general formula (I) given below: 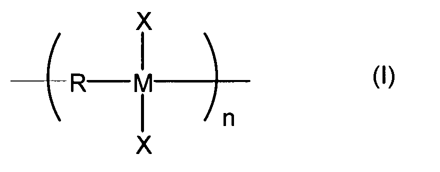 where M denotes copper or nickel, X denotes a halogen atom, R denotes a pyrazine derivative represented by general formula (II) given below, and "n" is an integer: 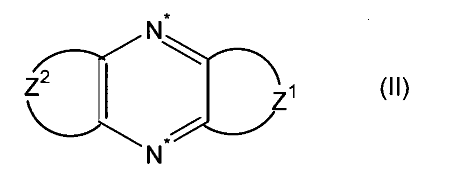 where each of Z¹ and Z², which may be the same or different, denotes an atomic group required for forming a carbon ring by joining with a methylene chain the carbon atoms in the 2-position and 3-position or the carbon atoms in the 5-position and 6-position of the pyrazine ring, and * denotes the binding position with M included in general formula (I).

According to one embodiment of the present invention, the pyrazine derivative is selected from the group consisting of a substituted or unsubstituted dicyclopentanopyrazine and dicyclohexanopyrazine.

The technology for controlling the structure of a coordination polymer has been provided by the present invention so as to make it possible to construct easily the coordination polymer having a linear structure.

This summary of the invention does not necessarily describe all necessary features so that the invention may also be a sub-combination of these described features.

The invention can be more fully understood from the following detailed description when taken in conjunction with the accompanying drawings, in which:

The structure of the coordination polymer, which is formed by consecutive interaction between bifunctional ligand and metal ion, is greatly affected in accordance with the steric and electronic character of the ligand and the metal. It is possible for the coordination polymer to be formed of pyrazine, which is one of the typical bridging ligands included in the coordination polymer, and a copper compound or a nickel compound as a transition metal assuming a octahedral hexa-coordination structure or a square tetra-coordination structure. In the coordination polymer of the particular construction, the d-orbit of the transition metal and the π-orbit of the nitrogen atom contained in pyrazine are unlikely to interact because of the electronic and steric effects. However, the present inventors have succeeded in the synthesis of a one-dimensional coordination polymer having a linear structure that permits the interaction of the orbits. To be more specific, the particular compound has been synthesized by using as a ligand a pyrazine derivative in which the carbon atoms in the 2-position and 3-position and the carbon atoms in the 5-position and 6-position of the pyrazine ring are joined to each other with a methylene chain interposed therebetween. The one-dimensional coordination polymer having "a linear structure" as defined in the present invention denotes a one-dimensional coordination polymer in which the molecular plane of the pyrazine derivative is perpendicular to the coordination plane of the metal ion, and the orbitals are harmonized between pyrazine and the metal.

To be more specific, the novel one-dimensional coordination polymer provided by the present invention is represented by general formula (I) given below: 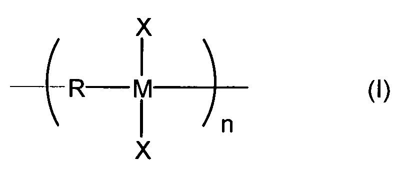 where M denotes copper or nickel, X denotes a halogen atom, R denotes a pyrazine derivative represented by general formula (II) given below, and "n" is an integer: 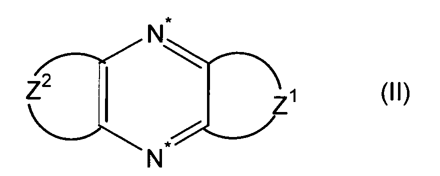 where each of Z¹ and Z², which may be the same or different, denotes an atomic group required for forming a carbon ring by joining with a methylene chain the carbon atoms in the 2-position and 3-position or the carbon atoms in the 5-position and 6-position of the pyrazine ring, and * denotes the binding position with M included in general formula (I).

The specific examples of the pyrazine derivative include dicyclopentanopyrazine and dicyclohexanopyrazine. These pyrazine derivatives can be synthesized by the known method. For example, the pyrazine derivatives can be synthesized by the method proposed by Baumgarten et al, as disclosed in, for example, "Baumgarten, H.E.; Bower, F.A. J. Am. Chem. Soc. 1954, 20, p4561-4564".

Also, the coordination polymer of the present invention can be synthesized by the complex-forming reaction utilizing the diffusion method or by the spontaneous evaporation method. An example of the manufacturing process utilizing the diffusion method will now be described. Specifically, two glass tubes differing from each other in diameter and height are arranged such that the glass tube having a smaller diameter and a smaller height is housed in the other glass tube. A solution of a copper compound or a nickel compound is put in the inner tube until the surface of the solution is elevated to reach a height about one third of the height of the inner tube, and a solution of a pyrazine derivative is put in the outer tube. Then, a solvent is slowly added to the upper layer portion of the solution so as not to disturb the surface of the solution. If the apparatus is left to stand with a lid disposed on the outer tube, the metal and the ligand are slowly mixed with each other so as to form a complex.

As described above, it has been clarified by the present invention that the construction of the coordination polymer can be controlled by simple structural modification of the ligand. Also, the complex-forming reaction carried out in the present invention is very simple. It follows that the present invention produces a very large technical effect in the industries relating to the electric, magnetic, and optical materials.

### (Example)

The present invention will now be described on the basis of an Example. Needless to say, however, the technical scope of the present invention is not limited by the following Example.

Specifically, prepared was a container comprising two glass tubes differing from each other in diameter and height, which were arranged such that an inner tube formed of a test tube having an inner volume of 2 mL was housed in an outer tube formed of a test tube having an inner volume of 5 mL. Then, an ethanol solution of dicyclopentanopyrazine (1M; 0.5 mL, 0.5 mmol) prepared in advance was put in the outer tube, and an aqueous solution of copper (II) chloride (1M; 0.5 mL, 0.5 mmol) was put in the inner tube. After ethanol was slowly added so as not to disturb the interface with the solution until the liquid surface was rendered higher than the inner tube, the solution was left to stand at 25°C for 40 hours with the outer tube closed by a lid of septum. It was possible to obtain a deep green prismatic crystal and a deep green-red dichroic prismatic crystal. An X-ray crystal structure analysis was applied to the crystals thus obtained, with the result that each of these crystals was found to have a linear structure.

## Claims

1. A one-dimensional coordination polymer having a linear structure and represented by general formula
(I) given below: 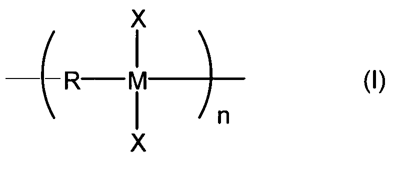
where M denotes copper or nickel, X denotes a halogen atom, R denotes a pyrazine derivative represented by general formula (II) given below, and n is an integer: 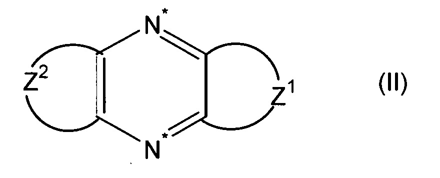 where each of Z¹ and Z², which may be the same or different, denotes an atomic group required for forming a carbon ring by joining with a methylene chain the carbon atoms in the 2-position and 3-position or the carbon atoms in the 5-position and 6-position of the pyrazine ring, and * denotes the binding position with M included in general formula (I).

2. The one-dimensional coordination polymer according to claim 1, **characterized in that** the pyrazine derivative is selected from the group consisting of a substituted or unsubstituted dicyclopentanopyrazine and dicyclohexanopyrazine.
